# EUROPÄISCHE PATENTSCHRIFT

(11) **EP 1 460 810 B1**
(45) Veröffentlichungstag und Bekanntmachung des Hinweises auf die Patenterteilung: **14.07.2010**
(21) Anmeldenummer: 04100308.8
(22) Anmeldetag: 29.01.2004
(51) Int. Cl.: H04L 12/56

(54) **Verfahren und Jitterpufferregelschaltung zur Regelung eines Jitterpuffers**
-Method and control circuit for jitter buffers
-Méthode et circuit de régulation pour les tampons de gigue

(30) Priorität: 20.03.2003 DE 10312438
(43) Veröffentlichungstag der Anmeldung: 22.09.2004
(73) Patentinhaber: SIEMENS AKTIENGESELLSCHAFT, 80333 München (DE)
(72) Erfinder: Bauer, Wolfgang, 1220 Wien (AT); Fally, Gerhard, 1140 Wien (AT)
(74) Vertreter: Fritzsche, Thomas

(56) Entgegenhaltungen:
- WO-A-01/33899
- WO-A-95/14337

## Beschreibung

In zeitgemäßen Kommunikationssystemen werden Verbindungen zur Übermittlung kontinuierlicher Datenströme, zum Beispiel zur Sprach-, Video- und/oder Multimediakommunikation, in zunehmendem Maße auch über paketorientierte Kommunikationsnetze, wie z.B. LANs (Local Area Network), MANs (Metropolitan Area Network) oder WANs (Wide Area Network), geführt. Auf dieser Technik basiert beispielsweise die sogenannte Internettelefonie, die häufig auch als "Voice over Internet Protocol" (VoIP) bezeichnet wird.

Zur Übertragung eines kontinuierlichen Datenstroms über ein paketorientiertes Kommunikationsnetz wird der Datenstrom in einzeln zu übertragende Datenpakete aufgeteilt, die jeweils mit einer Zieladresse und einem Zeitstempel versehen werden. Beim Austritt aus dem paketorientierten Kommunikationsnetz wird aus den Datenpaketen wieder ein kontinuierlicher Datenstrom zusammengesetzt. Da die Datenpakete im paketorientierten Kommunikationsnetz prinzipiell unabhängig voneinander übertragen werden, treffen die Datenpakete in der Regel nicht in äquidistanten Zeitabständen und häufig auch nicht in ihrer ursprünglichen Reihenfolge am Austrittspunkt ein. Zum Ausgleich solcher Laufzeitschwankungen werden die Datenpakete oder ihr Dateninhalt vor dem Zusammensetzen des Datenstroms meist in einem sogenannten Jitterpuffer zwischengespeichert, aus dem sie in konstanten Zeitabständen ausgelesen werden. Auf diese Weise kann aus in unregelmäßigen Zeitabständen eintreffenden Datenpaketen wieder ein kontinuierlicher Datenstrom rekonstruiert werden.

Ein Nachteil eines solchen Jitterpuffers besteht darin, dass die Datenübertragung durch die Zwischenspeicherung zusätzlich verzögert wird. Die durchschnittliche Zwischenspeicherungsdauer der Datenpakete sollte daher nach Möglichkeit minimiert werden. Dabei ist jedoch zu beachten, dass die durchschnittliche Zwischenspeicherungsdauer nicht zu klein gewählt wird, da sonst verspätet eintreffende Datenpakete nicht mehr in die zeitliche Ausgabereihenfolge des Jitterpuffers eingeordnet werden könnten. Wenn ein Datenpaket erst eintrifft, wenn ein ihm in der ursprünglichen Sendereihenfolge nachfolgendes Datenpaket schon vom Jitterpuffer ausgegeben wurde, ist der reguläre Ausgabezeitpunkt für dieses verspätet eintreffende Datenpaket schon verstrichen und dieses Datenpaket ist zu verwerfen. Ein Ziel einer Jitterpufferregelung besteht also darin, die durchschnittliche Zwischenspeicherungsdauer unter der Nebenbedingung einer noch akzeptablen Datenpaketverlustrate zu minimieren. Die Druckschrift WO 95/14337 A1 beschreibt ein Verfahren zum adaptiven Auslesen von VoiP-Paketen aus einem Datenpuffer.

Bisher wird zur Regelung eines Jitterpuffers die mittlere durch die Zwischenspeicherung bedingte Übertragungsverzögerung gemessen und mittels eines ersten Regelkreises auf eine Sollverzögerung eingeregelt. Die Sollverzögerung kann hierbei fest vorgegeben sein oder durch einen zweiten Regelkreis derart geregelt werden, dass die Übertragungsverzögerung bei noch akzeptabler Paketverlustrate minimiert wird. Die Vorgabe einer festen Sollverzögerung schränkt jedoch die Flexibilität der Jitterpufferregelung ein während eine zusätzliche Regelung der Sollverzögerung insofern nachteilig ist, als ein zweiter Regelkreis benötigt wird. Durch zwei einander beeinflussende Regelkreise gestaltet sich die Regelung erheblich komplexer. Zudem können dabei Stabilitätsprobleme auftreten.

Es ist Aufgabe der vorliegenden Erfindung, ein Verfahren und eine Jitterpufferregelschaltung zur Regelung eines Jitterpuffers anzugeben, die eine adaptive Minimierung einer pufferungsbedingten mittleren Übertragungsverzögerung bei nur geringen Datenpaketverlusten erlauben.

Gelöst wird diese Aufgabe durch ein Verfahren mit den Merkmalen des Patentanspruchs 1 sowie durch eine Jitterpufferregelschaltung mit den Merkmalen des Patentanspruchs 6.

Zur Regelung eines zum Puffern eines Datenpaketstroms vorgesehenen Jitterpuffers wird für Datenpakete des Datenpaketstroms eine jeweilige durch die Pufferung bedingte Übertragungsverzögerung erfasst. Aus erfassten Übertragungsverzögerungen werden gewichtete Verzögerungsmittelwerte fortlaufend abgeleitet, wobei eine geringere Übertragungsverzögerung stärker gewichtet wird als eine höhere Übertragungsverzögerung. Abhängig von den fortlaufend abgeleiteten gewichteten Verzögerungsmittelwerten wird dann eine Auslesegeschwindigkeit des Jitterpuffers so geregelt, dass die abgeleiteten gewichteten Verzögerungsmittelwerte als Regelgröße auf eine vorgegebene Sollverzögerung eingeregelt werden.

Die stärkere Gewichtung geringerer Übertragungsverzögerungen bei der Bildung der gewichteten Verzögerungsmittelwerte entspricht einer stärkeren Gewichtung verspätet eintreffender Datenpakete. D.h. ein gewichteter Verzögerungsmittelwert stellt nicht die durchschnittliche Übertragungsverzögerung aller gepufferten Datenpakete als vielmehr ein Maß für die Übertragungsverzögerung verspätet eintreffender Datenpakete dar. Durch die Einregelung der pufferungsbedingten Verzögerungsdauer von verspätet eintreffenden Datenpaketen auf eine vorgegebene Sollverzögerung kann auf einfache Weise gewähr leistet werden, dass auch verspätet eintreffende Datenpakete noch gepuffert werden.

Ein überdurchschnittlich verspätet eintreffendes Datenpaket, das gerade noch kurz vor seinem Auslesezeitpunkt in den Jitterpuffer eingefügt wird und somit eine besonders geringe Übertragungsverzögerung aufweist, bewirkt durch deren stärkere Gewichtung, dass sich der gewichtete Verzögerungsmittelwert verringert. Dies bedingt wiederum eine Verringerung der Auslesegeschwindigkeit des Jitterpuffers, um so den gewichteten Verzögerungsmittelwert wieder an die Sollverzögerung anzugleichen. Falls dadurch noch stärker verspätete Datenpakete vor ihrem regulären Ausgabezeitpunkt in den Jitterpuffer eingefügt werden, wird die Auslesegeschwindigkeit weiter verringert. Andernfalls bleibt die Auslesegeschwindigkeit weitgehend konstant oder vergrößert sich wieder beim Ausbleiben vergleichbar verspäteter Datenpakete.

Durch die Regelung der gewichteten Verzögerungsmittelwerte wird die durchschnittliche Übertragungsverzögerung des Jitterpuffers automatisch an die Verspätungsdauer von verspätet eintreffenden Datenpaketen adaptiert. Auf diese Weise kann die pufferungsbedingte Übertragungsverzögerung unter Einhaltung einer geringen und gegebenenfalls einstellbaren Datenpaketverlustrate minimiert werden. Dass hierzu nur ein einzelner Regelkreis benötigt wird, stellt einen wesentlichen Vorteil der Erfindung dar.

Vorteilhafte Ausführungsformen und Weiterbildungen der Erfindung sind in den abhängigen Ansprüchen angegeben.

Nach einer vorteilhaften Ausführungsform der Erfindung kann ein neuer gewichteter Verzögerungsmittelwert jeweils aus ei nem vorher abgeleiteten gewichteten Verzögerungsmittelwert und einer aktuell erfassten Übertragungsverzögerung abgeleitet werden. Auf diese Weise kann der benötigte Rechenaufwand erheblich verringert werden.

Weiterhin kann eine aktuell erfasste Übertragungsverzögerung mit einem vorher abgeleiteten gewichteten Verzögerungsmittelwert verglichen werden und die Gewichtung der aktuell erfassten Übertragungsverzögerung abhängig vom Vergleichsergebnis ermittelt werden. Vorzugsweise kann die aktuell erfasste Übertragungsverzögerung mit einem ersten vorgegebenen Gewichtswert gewichtet werden, falls die aktuell erfasste Übertragungsverzögerung kleiner als der vorher abgeleitete gewichtete Verzögerungsmittelwert ist und mit einem zweiten vorgegebenen Gewichtswert gewichtet werden, falls die aktuell erfasste Übertragungsverzögerung größer als der vorher abgeleitete gewichtete Verzögerungsmittelwert ist. Dabei ist der erste Gewichtswert größer als der zweite Gewichtswert. Auf diese Weise wird gewissermaßen eine unter dem bisherigen gewichteten Verzögerungsmittelwert liegende Übertragungsverzögerung eines überdurchschnittlich verspäteten Datenpakets stärker gewichtet, so dass der gewichtete Verzögerungsmittelwert automatisch an verspätet eintreffende Datenpakete angepasst wird.

Durch eine geeignete Wahl des ersten und des zweiten Gewichtswerts können spezifische Regelgeschwindigkeiten der Jitterpufferregelung bedarfsweise eingestellt werden. Hierbei wirkt sich die Wahl des ersten Gewichtswerts insbesondere auf die Geschwindigkeit aus, mit der die Jitterpufferregelung auf besonders stark verspätete Datenpakete reagiert. Demgegenüber wirkt sich der zweite Gewichtswert auf die Geschwindigkeit aus, mit der die Jitterpufferregelung auf ein Ausbleiben von besonders verspäteten Datenpaketen reagiert.

Ein Ausführungsbeispiel der Erfindung wird nachfolgend anhand der Zeichnung näher erläutert. Dabei zeigen jeweils in schematischer Darstellung:
- Figur 1: einen Jitterpuffer und
- Figur 2: eine Jitterpufferregelschaltung.

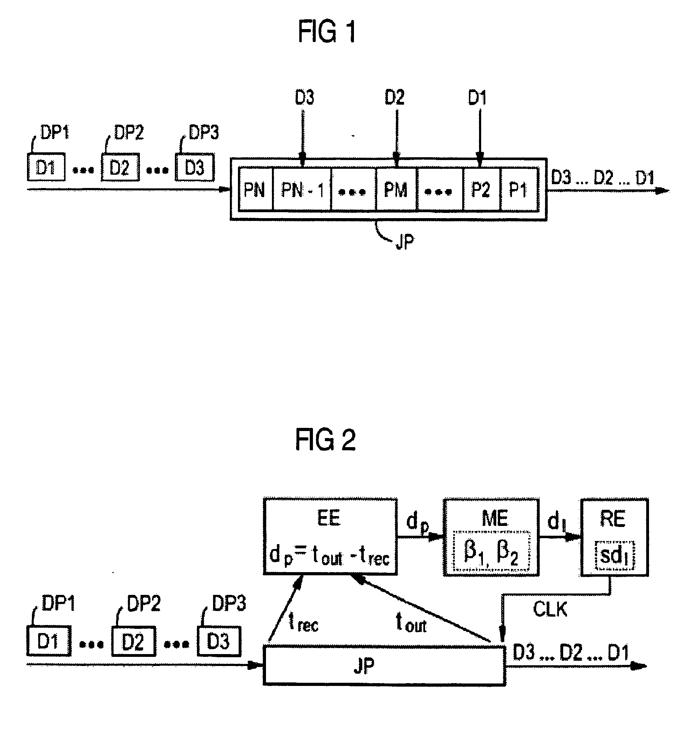

In **Figur 1** ist ein Jitterpuffer JP schematisch dargestellt, dem Datenpakete DP1,...,DP2,...,DP3 eines vorzugsweise internetprotokollbasierten Datenpaketstroms, z.B. zur Echtzeit-, Sprach-, Video- und/oder Multimediakommunikation, zum Zwischenspeichern zugeleitet werden. Die Datenpakete DP1,...,DP2,...,DP3 enthalten jeweils einen Zeitstempel, der die ursprüngliche zeitliche Position des betreffenden Datenpakets im Datenpaketstrom angibt. Für das vorliegende Ausführungsbeispiel sei angenommen, dass die Datenpakete DP1, DP2 und DP3 in der angegebenen Reihenfolge erzeugt wurden, aber beim Jitterpuffer JP aufgrund von Laufzeitschwankungen in der Reihenfolge DP3, DP2 und DP1 ankommen. Das Datenpaket DP3 hat somit aufgrund einer überdurchschnittlich schnellen Übermittlung das Datenpaket DP2 überholt, während das Datenpaket DP1 aufgrund seiner besonders großen Verspätung hinter das Datenpaket DP2 zurückgefallen ist.

Als Nutzdateninhalt enthält das Datenpaket DP1 Kommunikationsdaten D1, das Datenpaket DP2 Kommunikationsdaten D2 und das Datenpaket DP3 Kommunikationsdaten D3. Für das vorliegende Ausführungsbeispiel sei angenommen, dass die Kommunikationsdaten D1, D2 und D3 VoIP-Kommunikationsdaten (VoIP: Voice Over Internet Protocol) sind, die jeweils digitale Abtastwerte eines Sprachsignals umfassen.

Der Jitterpuffer JP weist eine Vielzahl von Speicherpositionen P1,...,PN auf, die in der angegebenen Reihenfolge zyklisch ausgelesen werden. Um die Datenpakete DP1, DP2 und DP3 bzw. ihre Nutzdateninhalte D1, D2 und D3 wieder in ihre ursprüngliche Reihenfolge zu bringen, werden diese in der Reihenfolge der Zeitstempel der Datenpakete DP1, DP2, DP3 an Speicherpositionen P1,...,PN des Jitterpuffers JP zwischengespeichert. Der Dateninhalt D1, D2 bzw. D3 eines ankommenden Datenpakets DP1, DP2 bzw. DP3 wird somit an einer anhand des Zeitstempels des Datenpakets DP1, DP2 bzw. DP3 bestimmten Speicherposition P1,...,PN-1 bzw. PN eingefügt. Dementsprechend wird der Dateninhalt, hier D3, eines besonders früh eintreffenden Datenpakets, hier DP3, an einer hinteren Speicherposition, hier PN-1, eingefügt, der Dateninhalt, hier D2, eines Datenpakets, hier DP2, mit durchschnittlicher Laufzeit an einer mittleren Speicherposition, hier PM, eingefügt und der Dateninhalt, hier D1 eines verspätet eintreffenden Datenpakets, hier DP1, an einer vorderen Speicherposition, hier P2, eingefügt. Auf diese Weise werden die Dateninhalte D1, D2 und D3 und damit die Abtastwerte des Sprachsignals in ihrer ursprünglichen zeitlichen Reihenfolge vom Jitterpuffer JP ausgegeben.

In **Figur 2** ist eine Jitterpufferregelschaltung zur Regelung des Jitterpuffers JP schematisch dargestellt. Mit den Bezugszeichen in Figur 1 übereinstimmende Bezugszeichen bezeichnen hierbei gleiche Gegenstände. Durch die Regelung des Jitterpuffers JP soll einerseits die Anzahl zu spät eintreffender und damit zu verwerfender Datenpakete und andererseits die pufferungsbedingte durchschnittliche Übertragungsverzögerung der Datenpakete minimiert werden. Als zu spät eintreffendes Datenpaket sei in diesem Zusammenhang ein Datenpaket bezeichnet, bei dessen Eintreffen der Ausgabezeitpunkt der entsprechenden Speicherposition schon verstrichen ist. Mit anderen Worten: die pufferungsbedingte Übertragungsverzögerung sollte so gering wie möglich sein, aber noch groß genug, um wahrnehmbare Paketverluste zu vermeiden.

Die Jitterpufferregelschaltung weist eine Erfassungseinrichtung EE zum Erfassen oder Messen einer Übertragungsverzögerung dₚ eines jeweiligen Datenpakets, eine Mittelungseinrichtung ME zum fortlaufenden Ableiten von gewichteten Verzögerungsmittelwerten dₗ aus erfassten Übertragungsverzögerungen dₚ sowie eine Regeleinrichtung RE zur Regelung der Auslesegeschwindigkeit des Jitterpuffers JP in Abhängigkeit von den gewichteten Verzögerungsmittelwerten dₗ. Die Erfassungseinrichtung EE erfasst für jedes der Datenpakete DP1, ..., DP2, ..., DP3 dessen Empfangszeitpunkt t_{rec} sowie den Ausgabezeitpunkt tₒᵤₜ des ersten Abtastwertes des betreffenden Datenpakets aus dem Jitterpuffer JP. Hieraus wird die Übertragungsverzögerung des betreffenden Datenpakets zu dₚ = tₒᵤₜ - t_{rec} ermittelt. Dies entspricht im Wesentlichen der Verweilzeit des Dateninhalts des betreffenden Datenpakets im Jitterpuffer JP. Die ermittelten Übertragungsverzögerungen dₚ der Datenpakete DP1,...,DP2,...,DP3 werden von der Erfassungseinrichtung EE an die Mittelungseinrichtung ME weitergegeben, die daraus fortlaufend die gewichteten Verzögerungsmittelwerte dₗ berechnet und diese an die Regeleinrichtung RE weitergibt. Die Regeleinrichtung RE vergleicht die eintreffenden gewichteten Verzögerungsmittelwerte dₗ mit einer vorgegebenen Sollverzögerung sdₗ und regelt abhängig davon einen Auslesetakt CLK, mit dem die Abtastwerte aus dem Jitterpuffer JP ausgelesen werden, derart, dass die gewichteten Verzögerungsmittelwerte dₗ auf die Sollverzögerung sdₗ eingeregelt werden. Zur Synchronisation der Datenrate der ausgelesenen Abtastwerte mit nachgeschalteten Kommunikationsanwendungen kann die durch die Regelung bedingte, leichte Schwankung des Auslesetaktes CLK durch Einfügen oder Verwerfen einzelner Abtastwerte in bzw. aus dem Abtastwertestrom oder durch eine Abtastratenumsetzung kompensiert werden.

Durch die Erfassungseinrichtung EE, die Mittelungseinrichtung ME und die Regeleinrichtung RE wird ein Regelkreis zum Einregeln der gewichteten Verzögerungsmittelwerte dₗ als Regelgröße auf die vorgegebene Sollverzögerung sdₗ realisiert. Die Erfassungseinrichtung EE, die Mittelungseinrichtung ME und die Regeleinrichtung RE können vorzugsweise als Programmmodule oder Programmobjekte im Sinne einer objektorientierten Programmierung auf einem Mikroprozessorsystem implementiert sein.

Die gewichteten Verzögerungsmittelwerte dₗ werden durch die Mittelungseinrichtung ME in rekursiver Weise berechnet. Für jedes gepufferte Datenpaket DP1,...,DP2,...,DP3 wird aus dessen aktuell erfasster Übertragungsverzögerung dₚ sowie aus dem vorhergehend berechneten gewichteten Verzögerungsmittelwert d_{lold} ein neuer gewichteter Verzögerungsmittelwert dₗ mittels der Rechenvorschrift dₗ= (1-s)·d_{lold} + s·dₚ berechnet. Hierbei ist s dasjenige Gewicht, mit dem die aktuell erfasste Übertragungsverzögerung dₚ in den gewichteten Verzögerungsmittelwert dₗ eingeht. Das Gewicht s wird für jedes eintreffende Datenpaket anhand eines Vergleichs von dessen Übertragungsverzögerung dₚ mit dem vorhergehenden gewichteten Verzögerungsmittelwert d_{lold} bestimmt. Dabei ist s = β₁ falls dₚ < d_{lold} und s = β₂ falls dₚ >= d_{lold}. β₁ ist hierbei ein vorgegebener erster Gewichtswert und β₂ ein vorgegebener zweiter Ge wichtswert, wobei β₁ erheblich größer als β₂ ist. Somit wird eine Übertragungsverzögerung dₚ, die geringer ist als der vorhergehende gewichtete Verzögerungsmittelwert d_{lold}, erheblich stärker bei der Berechnung des neuen Verzögerungsmittelwertes d₁ gewichtet, als eine Übertragungsverzögerung dₚ, die größer oder gleich dem vorhergehenden gewichteten Verzögerungsmittelwert d_{lold} ist.

Durch die stärkere Gewichtung geringerer Übertragungsverzögerungen dₚ werden bei der Bildung der gewichteten Verzögerungsmittelwerte dₗ die verspätet eintreffenden Datenpakete, hier DP1, überdurchschnittlich stark gewichtet. Der gewichtete Verzögerungsmittelwert dₗ stellt somit im Wesentlichen ein Maß für die Übertragungsverzögerung der verspätet eintreffenden Datenpakete dar. Indem durch die Jitterpufferregelschaltung nicht der Durchschnittswert der Übertragungsverzögerungen dₚ, sondern ein Maß für die Übertragungsverzögerung der verspäteten Datenpakete als Regelgröße verwendet wird, wird der Jitterpuffer JP automatisch so geregelt, dass verspätet eintreffende Datenpakete gerade nicht verloren gehen.

Durch geeignete Wahl der einzelnen Gewichtswerte β₁ und β₂ können die Regelgeschwindigkeiten des Regelkreises eingestellt und so an unterschiedliche Übertragungsverhältnisse angepasst werden. Durch den ersten Gewichtswert β₁ wird hierbei die Geschwindigkeit beeinflusst, mit der der Regelkreis auf besonders verspätete Datenpakete reagiert. Dagegen wird durch den zweiten Gewichtswert β₂ die Geschwindigkeit beeinflusst, mit der der Regelkreis auf ein Ausbleiben verspäteter Datenpakete reagiert. Ferner wird durch den Quotienten von β₁ und β₂ bestimmt, wie stark die gewichteten Verzögerungsmittelwerte dₗ zu kurzen Übertragungsverzögerungen dp hin verschoben werden. Indirekt kann dadurch die Paketverlustrate beeinflusst werden. Durch Vergrößerung dieses Quotienten wird die Paketverlustrate im Allgemeinen verringert.

In einer typischen Übertragungssituation erweist sich ein erster Gewichtswert β₁ in der Größenordnung von 0,1 und ein zweiter Gewichtswert β₂ in der Größenordnung von 0,001 als vorteilhaft. Bei typischen Laufzeitverteilungen von Datenpaketen führt eine solche Wahl der Gewichtswerte β₁ und β₂ zu einer akzeptablen Paketverlustrate in der Größenordnung von 0,1 - 1%.

Da β₁ wesentlich größer als β₂ ist, stellen sich die gewichteten Verzögerungsmittelwerte dₗ schnell auf kleine Übertragungsverzögerungen dₚ ein und gehen beim Ausbleiben verspäteter Datenpakete langsam zurück. Damit kann sich die pufferungsbedingte Übertragungsverzögerung verhältnismäßig schnell, d.h. mit wenigen Paketverlusten, an eine Erhöhung der Anzahl oder der Verspätung von verspäteten Datenpaketen anpassen. Auf diese Weise wird die durchschnittliche pufferungsbedingte Übertragungsverzögerung - obwohl sie nicht selbst als Regelgröße verwendet wird - automatisch auf einen Minimalwert eingeregelt, wobei gleichzeitig eine niedrige Paketverlustrate eingehalten wird. Im Unterschied zum bekannten Stand der Technik wird hierfür nur ein einzelner Regelkreis benötigt.

## Patentansprüche

1. Verfahren zur Regelung eines Jitterpuffers (JP) zum Puffern eines Datenpaketstroms, wobei
a) für Datenpakete (DP1, DP2, DP3) des Datenpaketstroms eine jeweilige durch die Pufferung bedingte Übertragungsverzögerung (dₚ) erfasst wird,
b) aus erfassten Übertragungsverzögerungen (dₚ) gewichtete Verzögerungsmittelwerte (d₁) fortlaufend abgeleitet werden, wobei eine geringere Übertragungsverzögerung stärker gewichtet wird als eine höhere Übertragungsverzögerung, und
c) eine Auslesegeschwindigkeit (CLK) des Jitterpuffers (JP) abhängig von den fortlaufend abgeleiteten gewichteten Verzögerungsmittelwerten (d₁) so geregelt wird, dass diese als Regelgröße auf eine vorgegebene Sollverzögerung (sd₁) eingeregelt werden.

2. Verfahren nach Anspruch 1,
**dadurch gekennzeichnet,**
**dass** ein neuer gewichteter Verzögerungsmittelwert (d₁) aus einem vorher abgeleiteten gewichteten Verzögerungsmittelwert und einer aktuell erfassten Übertragungsverzögerung (dₚ) abgeleitet wird.

3. Verfahren nach einem der vorhergehenden Ansprüche,
**dadurch gekennzeichnet,**
**dass** eine aktuell erfasste Übertragungsverzögerung (dₚ) mit einem vorher abgeleiteten gewichteten Verzögerungsmittelwert verglichen wird, und die Gewichtung der aktuell erfassten Übertragungsverzögerung (dₚ) abhängig vom Vergleichsergebnis ermittelt wird.

4. Verfahren nach Anspruch 3,
**dadurch gekennzeichnet,**
**dass** die aktuell erfasste Übertragungsverzögerung (dₚ) mit einem ersten vorgegebenen Gewichtswert (ß₁) gewichtet wird, falls die aktuell erfasste Übertragungsverzögerung (dₚ) kleiner als der vorher abgeleitete gewichtete Verzögerungsmittelwert ist, und mit einem zweiten vorgegebenen Gewichtswert (ß₂) gewichtet wird, falls die aktuell erfasste Übertragungsverzögerung (dₚ) größer als der vorher abgeleitete gewichtete Verzögerungsmittelwert ist, wobei der erste Gewichtswert (ß₁) größer als der zweite Gewichtswert (ß₂) ist.

5. Verfahren nach einem der vorhergehenden Ansprüche,
**dadurch gekennzeichnet,**
**dass** die Regelgröße (d₁) durch einen einzigen Regelkreis geregelt wird.

6. Jitterpufferregelschaltung zur Regelung eines Jitterpuffers (JP) zum Puffern eines Datenpaketstroms, mit
a) einer Erfassungseinrichtung (EE) zum Erfassen einer durch die Pufferung bedingten Übertragungsverzögerung (dₚ) eines jeweiligen Datenpakets (DP1, DP2, DP3) des Datenpaketstroms,
a) einer Mittelungseinrichtung (ME) zum fortlaufenden Ableiten von gewichteten Verzögerungsmittelwerten (d₁) aus erfassten Übertragungsverzögerungen (dₚ) bei stärkerer Gewichtung einer geringeren Übertragungsverzögerung gegenüber einer höheren Übertragungsverzögerung, und
b) einer Regeleinrichtung (RE) zum Einregeln der fortlaufend abgeleiteten gewichteten Verzögerungsmittelwerte (d₁) auf eine vorgegebene Sollverzögerung (sd₁) durch Regelung einer Auslesegeschwindigkeit (CLK) des Jitter puffers (JP) abhängig von den fortlaufend abgeleiteten gewichteten Verzögerungsmittelwerten (d₁).

## Claims

1. Method for regulating a jitter buffer (JP) for buffering a data packet stream, wherein
a) a respective transmission delay (dₚ) caused by the buffering is registered for data packets (DP1, DP2, DP3) of the data packet stream,
b) weighted mean delay values (d₁) are continuously derived from registered transmission delays (d₁), wherein a shorter transmission delay is weighted higher than a longer transmission delay, and
c) a read-out speed (CLK) of the jitter buffer (JP) is regulated as a function of the continuously derived weighted mean delay values (d₁) such that said values are adjusted as regulating variables to a predetermined required delay (sd₁).

2. Method according to Claim 1, **characterized in that** a new weighted mean delay value (d₁) is derived from a previously derived weighted mean delay value and a currently registered transmission delay (dₚ).

3. Method according to one of the preceding claims, **characterized in that** a currently registered transmission delay (dₚ) is compared with a previously derived weighted mean delay value, and the weighting of the currently registered transmission delay (dₚ) is determined as a function of the result of the comparison.

4. Method according to Claim 3, **characterized in that** the currently recorded transmission delay (dₚ) is weighted with a first predetermined weight value (ß₁) if the currently registered transmission delay (dₚ) is shorter than the previously derived weighted mean delay value, and is weighted with a second predetermined weight value (ß₂) if the currently registered transmission delay (dₚ) is longer than the previously derived weighted mean delay value, wherein the first weight value (ß₁) is greater that the second weight value (ß₂).

5. Method according to one of the preceding claims, **characterized in that** the regulating variable (d₁) is regulated by one single regulating circuit.

6. Jitter buffer regulating circuit for regulating a jitter buffer (JP) for buffering a data packet stream, said jitter buffer regulating circuit comprising
a) a registering device (EE) for registering a transmission delay (dₚ) of a respective data packet (DP1, DP2, DP3) of the data packet stream caused by the buffering,
b) a mean-forming device (ME) for continuously deriving weighted mean delay values (d₁) from registered transmission values (dₚ) with higher weighting of a shorter transmission delay in relation to a longer transmission delay, and
c) a regulating device (RE) for adjusting the continuously derived weighted mean delay values (d₁) to a predetermined required delay (sd₁) by regulating a read-out speed (CLK) of the jitter buffer as a function of the continuously derived weighted mean delay values (d₁).

## Revendications

1. Procédé de régulation d'un tampon de gigue (JP) permettant de mettre en mémoire tampon un flux de paquets de données, consistant à
a) pour des paquets de données (DP1, DP2, DP3) du flux de paquets de données, détecter un retard de transmission (dₚ) respectif dû à la mise en mémoire tampon,
b) à partir des retards de transmission (dp), déduire de manière continue des valeurs moyennes de retard pondérées (d₁), un retard de transmission plus petit étant pondéré plus fortement qu'un retard de transmission élevé, et
c) réguler une vitesse de lecture (CLK) du tampon de gigue (JP) en fonction des valeurs moyennes de retard pondérées (d₁) déduites de manière continue de sorte que celles-ci soient réglées en tant que variable commandée sur un retard théorique prédéfini (sd₁).

2. Procédé selon la revendication 1,
**caractérisé en ce**
**qu'**une nouvelle valeur moyenne de retard pondérée (d₁) est déduite d'une valeur moyenne de retard pondérée précédemment déduite et d'un retard de transmission actuellement détecté (dₚ).

3. Procédé selon l'une quelconque des revendications précédentes,
**caractérisé en ce**
**qu'**un retard de transmission actuellement détecté (dₚ) est comparé à une valeur moyenne de retard pondérée précédemment déduite et la pondération du retard de transmission actuellement détecté (dₚ) est déterminée en fonction du résultat de la comparaison.

4. Procédé selon la revendication 3,
**caractérisé en ce**
**que** le retard de transmission actuellement détecté (dₚ) est pondéré avec une première valeur de pondération prédéfinie (ß₁) si le retard de transmission actuellement détecté (dₚ) est inférieur à la valeur moyenne de retard pondérée précédemment déduite, et avec une deuxième valeur de pondération prédéfinie (ß₂) si le retard de transmission actuellement détecté (dₚ) est supérieur à la valeur moyenne de retard pondérée précédemment déduite, la première valeur de pondération (ß₁) étant plus grande que la deuxième valeur de pondération (ß₂).

5. Procédé selon l'une quelconque des revendications précédentes,
**caractérisé en ce**
**que** la variable commandée (d₁) est régulée par un seul circuit de régulation.

6. Circuit de régulation de tampon de gigue destiné à la régulation d'un tampon de gigues (JP) afin de mettre en mémoire tampon un flux de paquets de données, pourvu
a) d'un dispositif de détection (EE) destiné à détecter un retard de transmission (dp), dû à la mise en mémoire tampon, d'un paquet de données respectif (DP1, DP2, DP3) du flux de paquets de données,
a) d'un dispositif de calcul de valeur moyenne (ME) destiné à déduire de manière continue des valeurs moyennes de retard pondérées (d₁) à partir des retards de transmission détectés (dp), une pondération plus forte étant attribuée à un retard de transmission plus faible qu'à un retard de transmission plus élevé, et
b) d'un dispositif de régulation (RE) destiné à régler les valeurs moyennes de retard pondérées déduites de manière continue (d₁) sur un retard théorique prédéfini (sd₁) par régulation d'une vitesse de lecture (CLK) du tampon de gigue (JP) en fonction des valeurs moyennes de retard pondérées déduites de manière continue (d₁).
